# EUROPÄISCHE PATENTSCHRIFT

(11) **EP 2 874 752 B1**
(45) Veröffentlichungstag und Bekanntmachung des Hinweises auf die Patenterteilung: **20.02.2019**
(21) Anmeldenummer: 13735042.7
(22) Anmeldetag: 11.07.2013
(51) Int. Cl.: B04B 1/08, B04B 7/02, B04B 11/06, B04B 15/08, B04B 11/08

(54) **SEPARATORANORDNUNG**
SEPARATOR ARRANGEMENT
DISPOSITIF DE SÉPARATION

(30) Priorität: 23.07.2012 DE 102012106648
(43) Veröffentlichungstag der Anmeldung: 27.05.2015
(73) Patentinhaber: GEA Mechanical Equipment GmbH, 59302 Oelde (DE)
(72) Erfinder: QUITER, Kathrin, 48317 Drensteinfurt (DE); MACKEL, Wilfried, 59510 Lippetal-Herzfeld (DE)
(74) Vertreter: Specht, Peter
(86) Internationale Anmeldenummer: PCT/EP2013/064642
(87) Internationale Veröffentlichungsnummer: WO 2014/016125

(56) Entgegenhaltungen:
- DE-B- 1 178 014
- US-A- 4 081 129
- US-A1- 2012 040 816

## Beschreibung

Die Erfindung betrifft eine Separatoranordnung nach dem Oberbegriff des Anspruchs 1.

Derartige Separatoranordnungen sind an sich bekannt. Aus der gattungsgemäßen EP 1 119 416 B1 ist es bekannt, innerhalb einer Haube mit einer Pumpe einen Unterdruck gegenüber der Umgebung zu erzeugen, wodurch der Energieverbrauch zum Drehen der Trommel aufgrund verringerter Reibung am Trommelaußenmantel gesenkt werden kann. Die gattungsgemäße Konstruktion und ihre Arbeitsweise haben sich an sich bewährt.

In der DE 1 178014 B wird Luft durch eine Schälscheibe aus der Schälscheibenkammer und durch eine Verbindung auch direkt aus dem die Trommel abschnittsweise umgebenden Raum abgesaugt, so dass in dem Raum ein Unterdruck entsteht. In der US 4 081 129 A sind mittels aus der Umgebung einer Trommel angesaugter Luft Schälkammern mit Luft befüllbar. Ein Vakuum innerhalb einer Haube um die Trommel wird hier nicht erzeugt.

Ausgehend von dem gattungsgemäßen Stand der Technik besteht ein Bedarf nach einer Vereinfachung der bekannten Separatoranordnung und des Verfahrens zu ihrem Betrieb.

Die Erfindung löst diese Aufgabe durch den Gegenstand des Anspruchs 1. Sie schafft ferner das Verfahren des Anspruchs 7. Derart kann auf eine separate den Unterdruck erzeugende Einrichtung vorteilhaft verzichtet werden. Die Kosten zur Herstellung des Separators werden durch diese Maßnahme zudem nicht oder nur unwesentlich erhöht.

Entsprechend wird ein Verfahren zum Senken des Druckes im Haubeninnenraum einer Separatoranordnung geschaffen, bei welchem mit der Einrichtung nach Art einer Strahlpumpe der Druck im Haubeninnenraum abgesenkt wird.

Die Erfindung schafft ferner auch ein Verfahren zum Senken des Druckes im Haubeninnenraum mit einer erfindungsgemäßen Separatoranordnung, bei welchem vor einer Verarbeitung eines Produktes zunächst eine Flüssigkeit, insbesondere Wasser, durch die Trommel geleitet wird, um den Druck innerhalb der Haube abzusenken, und dass danach die eigentliche Verarbeitung eines zu verarbeitenden Produktes gestartet wird. Derart muss durch das Absenken des Druckes kein Produkt verworfen werden. Es ist aber auch denkbar, das Produkt selbst zur Senkung des Druckes zu nutzen, wenn es entsprechend unempfindlich ist. Nach einer Entleerung kann dieses Vorgehen ggf. wiederholt werden.

Weitere vorteilhafte Ausgestaltungen sind in den übrigen Unteransprüchen angegeben.

Nachfolgend wird die Erfindung unter Bezug auf die Zeichnung anhand eines Ausführungsbeispiels näher beschrieben. Es zeigt:
- Fig. 1: eine schematische schnittartige Darstellung einer ersten Separatoranordnung;
- Fig. 2: eine schematische schnittartige Darstellung eines Teilbereiches einer zweiten Separatoranordnung;
- Fig. 3: eine schematische schnittartige Darstellung einer dritten Separatoranordnung; und
- Fig. 4: eine schematische Darstellung einer erfindungsgemäßen Separatoranordnung mit einem im Schnitt dargestellten Antriebsraum.

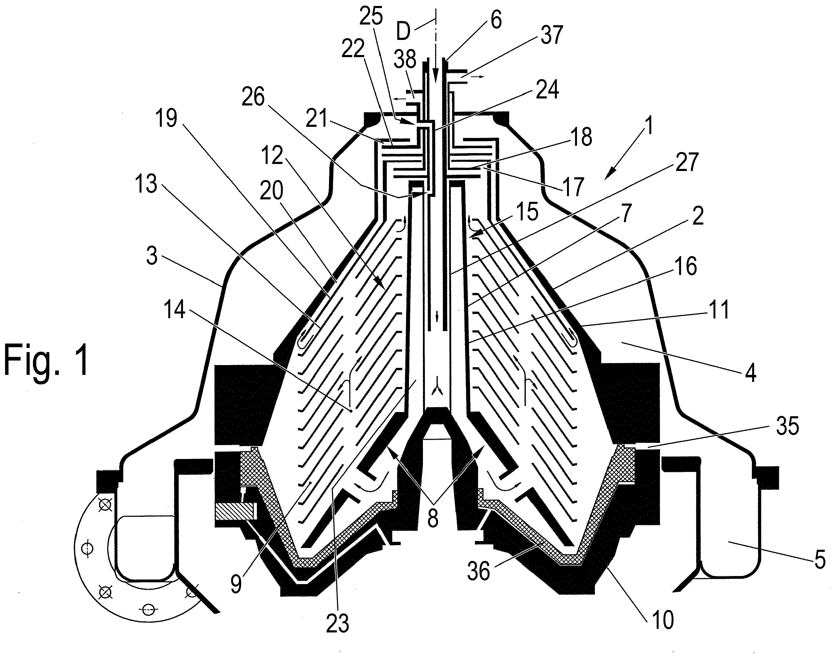

Fig. 1 zeigt eine Separatoranordnung 1 mit einem Separator, der eine vorzugsweise auf eine (hier nicht dargestellte) Antriebsspindel aufsetzbare drehbare Trommel 2 mit vertikaler Drehachse D aufweist.

Die Trommel 2 ist von einer sich im Betrieb nicht drehenden Haube 3 umgeben, die vorzugsweise in ihrem unteren Bereich mit einem Maschinengestell verbunden ist, derart, dass innerhalb der Haube 3 - zwischen der Haube 3 und der Trommel 2 - ein zum Äußeren der Haube 3 abgedichteter Haubeninnenraum 4 ausgebildet wird. Die Haube 3 weist hier ferner einen Feststofffänger 5 zum Auffangen aus der Trommel austretender Feststoffe auf.

Die Trommel 2 ist auf eine hier nicht dargestellte Antriebsspindel aufgesetzt und mit dieser drehfest gekoppelt, wobei die Antriebsspindel wiederum mittels eines hier nicht dargestellten Motors drehbar ist.

Zur Produktzuleitung in die Trommel 2 dient ein sich hier von oben in die Trommel 2 erstreckendes Zulaufrohr 6, welches sich im Betrieb nicht mit der Trommel 2 dreht sondern stillsteht. Dies ist die bevorzugte Ausgestaltung, obwohl im Rahmen der Erfindung auch Konstruktionen realisierbar sind, bei welchen die Produktzufuhr von unten in die Trommel 2 erfolgt (hier nicht dargestellt).

Das Zulaufrohr 6 mündet an seinem unteren Ende in einen Verteiler 7, der Verteilerkanäle 8 zum Einleiten eines zu verarbeitenden Produktes in den Trommelinnenraum 9 aufweist.

Die Trommel 2 weist vorzugsweise eine einfach oder vorzugsweise doppeltkonische Form mit einem Trommelunterteil 10 und einem Trommeloberteil 11 auf. Vorzugsweise ist in dem Trommelinnenraum ein Trenntellerpaket 12 aus axial beabstandeten Trenntellern 13 angeordnet, wobei hier innerhalb des Trenntellerpaktes 12 einer oder mehrere Steigekanäle 14 ausgebildet sind. Dies ist aber im Rahmen der Erfindung nicht zwingend.

Die in Fig. 1 dargestellte Separatoranordnung ermöglicht eine Trennung und vorzugsweise auch Klärung eines zu verarbeitenden Produktes in drei Phasen: eine leichtere und eine schwerere Flüssigkeitsphase und eine Feststoffphase. Diese Ausgestaltung ist vorteilhaft, aber nicht zwingend. Erfindungsgemäße Separatoren können auch als reine Trennvorrichtungen zur Flüssig-/Flüssigtrennung oder als Klärvorrichtungen zur Fest-/Flüssigtrennung ausgebildet sein oder betrieben werden. In dem zuletzt genannten Fall würde zur Ableitung der nur einen Flüssigkeitsphase nur eine Schälscheibe benötigt (hier nicht dargestellt).

Die leichtere Flüssigkeitsphase fließt im Trenntellerpaket radial nach innen und weiter in einem oder mehreren Ableitungskanälen 15 an einem Verteilerschaft 16 nach oben und wird schließlich in eine erste Schälkammer 17 und von dort durch eine erste (im Betrieb stillstehende Schälscheibe 18 (nach Art einer Zentripetalpumpe) und eine Ableitung 37 aus der Trommel 2 geleitet.

Die schwerere Flüssigkeitsphase fließt dagegen mit den Feststoffen im Trenntellerpaket 12 radial nach außen, fließt dort über den radial äußeren Rand eines Scheidetellers 19 oberhalb des Tellerpakets 12 und wird dort durch einen weiteren Ableitungskanal 20 in eine zweite Schälkammer 21 und von dort durch eine zweite (im Betrieb stillstehende Schälscheibe) 22 (wiederum nach Art einer Zentripetalpumpe) durch eine Ableitung 38 aus der Trommel 2 geleitet.

Feststoffe werden durch Feststoffaustragsöffnungen 35 ausgestoßen, welche von einem hydraulisch betätigbaren Kolbenschieber 36 verschließbar sind. Denkbar wäre aber auch eine Trommel mit Düsen zum kontinuierlichen Feststoffaustrag oder eine Trommel ohne Feststoffaustrag, wenn ein solcher nicht benötigt wird (Flüssig-/Flüssig-Trennung).

Im Verteilerschaft 16 ist ein Verteilerraum 23 (beispielsweise eine Bohrung)ausgebildet, aus welchem die Verteilerkanäle 8 abzweigen.

In den Verteilerraum 23 ragt zudem der untere Abschnitt des Zulaufrohrs 6, wobei zwischen dem sich nicht drehenden Zulaufrohr 6 und dem Verteilerraum 14 ein Umfangsspalt 27 ausgebildet ist. In der Bohrung des Verteilerraums 23 können außen auch Rippen oder Rippenkörper ausgebildet sein, die in der Höhe zumindest Teilbereiche vom Fuß her abdecken und radial bis an den Umfangsspalt 23 des Einlaufrohres reichen können. Unterhalb des Einlaufrohres können die Rippen auch bis zur Drehachse ausgebildet sein.

Um in dem Innenraum der Haube 4 zwischen Trommel 2 und Haube 3 im Betrieb ein Vakuum zu erzeugen, weist der Separator selbst eine Einrichtung 24 zum Senken des Druckes im Haubeninnenraum infolge von Drehungen der Trommel nach Art einer Strahlpumpe auf.

Diese Einrichtung 24 ist nach Fig. 1 in bevorzugter Ausgestaltung als eine Fluidverbindung - hier als eine Fluidleitung 24 - zwischen dem Haubeninnenraum 4 und dem Verteilerraum 23 ausgebildet. Dies wird hier auf einfache Weise dadurch realisiert, dass die Fluidleitung 24 als separate Leitung innerhalb des Zulaufrohrs 6 ausgebildet ist, die zum Zulaufrohr keine Verbindung aufweist bzw. fluidisch von diesem vollständig getrennt ist, wobei vorzugsweise eine Einlassöffnung 25 in die Fluidleitung 24 oberhalb der beiden Schälscheiben 18, 22 und oberhalb der drehbaren Trommel 2 als radiale Öffnung 25 im Zulaufrohr 6 ausgebildet ist. Von der Öffnung 25 erstreckt sich die Fluidleitung 24 innerhalb des Zulaufrohres 6 durch dasselbe axial bis in den Verteilerschaft 16, wo ein Auslass 26 in den Verteilerraum 23 ausgebildet ist.

Derart ist auf einfache Weise der notwendige Fluidkanal bzw. eine Fluidverbindung zwischen dem Haubeninnenraum 4 und dem Verteilerraum 23 realisierbar.
Im Betrieb - wenn Flüssigkeit in die Trommel geleitet wird, wirkt dieser Fluidkanal nach Art einer Strahlpumpe, so dass Luft/Gas aus dem Haubeninnenraum 4 durch die Fluidleitung 24 in den Verteilerraum 23 gefördert wird, von wo die Luft bzw. das Gas mit der Flüssigkeit (oder Produkt) durch die Trommel 2 und deren Ablauf bzw. deren Abläufe (hier die Schälscheiben) abgeleitet wird.

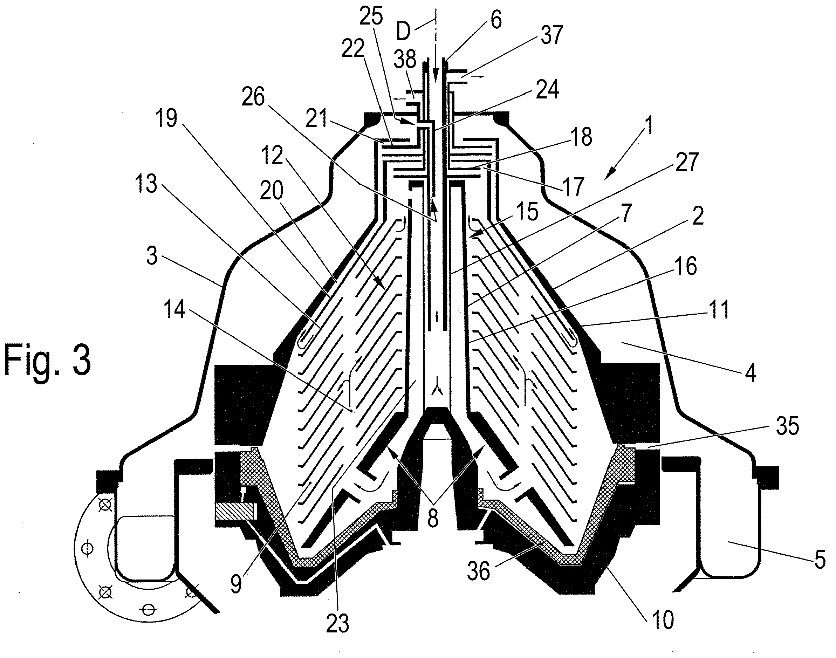

Die Strahlpumpenwirkung ist auch gegeben, wenn die Fluidleitung 24 sich ein Stück parallel im Zulaufrohr erstreckt und dann offen in diesem endet (siehe Fig. 3). Das Fluidrohr 24 wird am Ende 26 dann nicht nach außen (in Bezug auf das Einlaufrohr) geführt, sondern endet am Ende 26 offen im Zulaufrohr. Die Öffnung muss dann nur in Flussrichtung des Zulaufs liegen. In diesem Fall würde das Rohr ggf. weiter nach unten gezogen, es kann aber auch kürzer sein als in Fig. 1.

Besonders vorteilhaft ist es, wenn im Betrieb vor der Verarbeitung eines Produktes zunächst eine neutrale Flüssigkeit wie Wasser durch die Trommel 2 geleitet wird, um den Druck innerhalb der Haube 3 genügend abzusenken, beispielsweise um 0,3 bar oder mehr. Sodann - wenn der Druck innerhalb der Haube 3 genügend abgesenkt ist - kann die eigentliche Verarbeitung des Produktes erfolgen. Wenn die Gaseinleitung bei der Produktverarbeitung nicht stört, kann das Produkt auch selbst als das Fördermedium bzw. die Flüssigkeit genutzt werden.

Zwar ist allein durch die beschriebene Maßnahme eine Druckabsenkung innerhalb der Haube 3 realisierbar, mit welcher die Reibung am Außenmantel der Trommel 2 und damit der Energieverbrauch deutlich gesenkt werden. Dennoch ist es aber denkbar, unterstützend eine entsprechende "ein Vakuum erzeugende" Pumpe einzusetzen, um den Druck innerhalb der Haube 3 noch weiter abzusenken (hier nicht dargestellt).

Eine Messeinrichtung (nicht dargestellt) ermöglicht vorzugsweise die Überwachung des Druckes im Haubeninnenraum 4.

Zu betonen ist, dass es mit der beschrieben Maßnahme nicht notwendig ist, die Trommel 2 hermetisch gegen den Haubeninnenraum 4 abzudichten. Es kann auf den Aufwand einer entsprechenden hermetischen Ausgestaltung verzichtet werden.

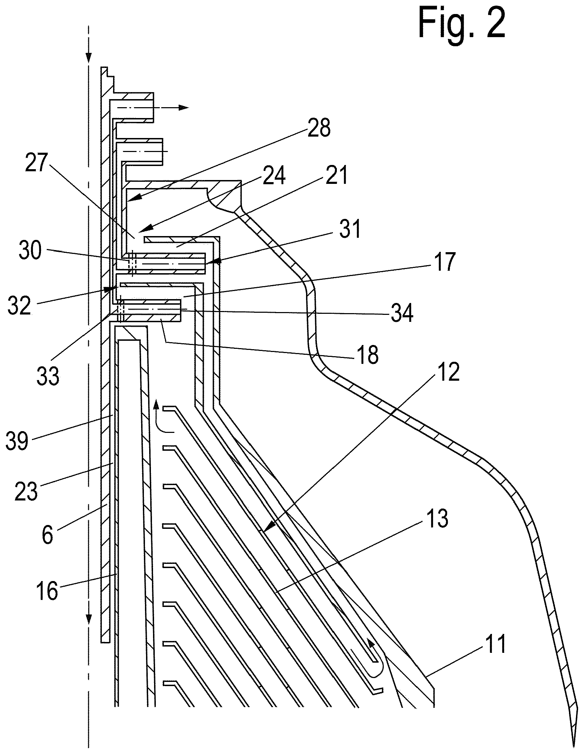

Nach der Variante der Fig. 2 wird die Fluidkanalverbindung 24 auf andere Weise realisiert.

Die Fluidverbindung 24 wird dabei auf einfache Weise gebildet von folgenden Merkmalen:
- einem Umfangsspalt 27 zwischen dem Trommeloberteil und einem Schälscheibenschaft 28,
- eine erste Bohrung 30 (gestrichelt angedeutet) durch die obere Schälscheibe 22 seitlich des eigentlichen Schälscheibenkanals 31,
- einem Umfangsspalt 32 zwischen der ersten und der zweiten Schälkammer 17,21)
- eine zweite Bohrung 33 (gestrichelt angedeutet) durch die untere Schälscheibe 18 seitlich des eigentlichen Schälscheibenkanals 34, und
dem Spalt 39 zwischen dem Zulaufrohr 6 und dem Verteilerschaft 16. Denkbar wäre auch diese Variante für eine Trommel mit nur einem Greifer mit einer Bohrung in nur dem einen Greifer.

Die Wirkungsweise des Ausführungsbeispiels der Fig. 2 entspricht vom Grundsatz her der der Fig. 1. Bei dieser Variante wird das Gas aus dem Haubeninnenraum 4 durch die Bohrungen 30/33, den Verteilerraum 23, die Verteilerkanäle 8, die Trommel und die Schälscheiben 18, 22 und durch aus dem rotierenden System gefördert. Damit ist auch bei dieser Variante wie bei Fig. 1 die Trommel nicht hermetisch geschlossen ausgestaltet.

Die Fluidverbindung kann auch auf noch andere Weise realisiert werden. Die Variante der Fig. 2 ist aber besonders kostengünstig realisierbar, da sie lediglich zwei Bohrungen in den Schälscheiben und ansonsten keine zusätzlichen konstruktiven Maßnahmen am Separator erfordert.

Es ist vorteilhaft, wenn ein (absoluter) Unterdruck kleiner 0,7 bar, vorzugsweise kleiner 0,6 bar, insbesondere kleiner 0,5 bar erzeugt wird.

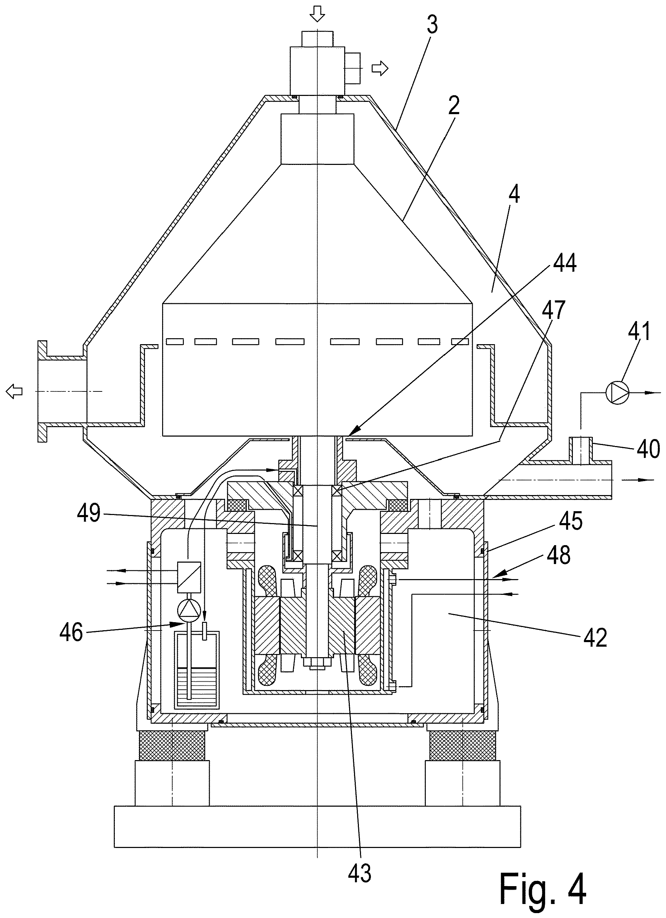

An den Haubeninnenraum 4 ist nach Fig. 4 ergänzend bei einer hier nicht detailliert dargestellten Trommel insbesondere nach Art der Fig.1 oder 2 ferner an einem Unterdruckanschluss 40 ergänzend eine Pumpe 41 (oder eine sonstige Einrichtung zum Senken des Druckes in dem Haubeninnenraum 4 gegenüber der Umgebung) angeschlossen, mit welcher in dem Haubeninnenraum 4 ergänzend ein Unterdruck gegenüber der Umgebung U außerhalb des Haubeninnenraumes 4 erzeugbar ist.

Falls der Antriebsraum 42 für den Antriebsmotor 43 unterhalb der Trommel bei einer Ausgestaltung als Direktantrieb in den Unterdruckbereich des Haubeninnenraumes ähnlich zur Fig. 4 einbezogen werden soll, so kann dieses besonders einfach durch Schaffung einer offenen Verbindung 44 der beiden Räume realisiert werden. Besonders vorteilhaft ist dabei, die Verbindung drehachsennah anzusiedeln. Es wäre auch denkbar, die Verbindung 44 zu schließen und stattdessen im Antriebsraum mit einer Pumpe oder dgl. den Druck zu senken (nicht dargestellt).

Der Antriebsraum 42 wird hier von einer Antriebsumhausung 45 begrenzt, die entsprechend der Aufgabe, in dem Antriebsraum 42 auch einen Unterdruck gegenüber der Umgebung U zu erzeugen, wiederum bis auf die Verbindung 44 in entsprechend abgedichteter Bauart ausgeführt ist. Dazu sind nach Fig. 4 zwischen Elementen der Antriebsumhausung wiederum geeignete Dichtungen ausgebildet.

Im Antriebsraum 42 ist zudem ein Schmierungssystem 46 angeordnet, welches zur Schmierung der Spindellagerung 47 der Spindel 49 und/oder zur Schmierung von Komponenten am Motor dient.
In den Antriebsraum 42 münden hier ferner Ab- und Zuleitungen 48 von einem oder mehreren Kühlmittelkreisläufen, hier einmal für den Motor sowie einmal für das Schmierungssystem.

Es versteht sich, dass zur Schaffung eines Vakuums nach Fig. 1 bis 4 jeweils der zu evakuierende Bereich entsprechend gegen die Umgebung abzudichten ist (insbesondere die Haube, der Feststofffänger (wenn vorhanden) und ggf. das Antriebsgestell oder sonstige Bereiche, die den die Trommel umgebenden Raum begrenzen.).

### Bezugszeichen

- Separatoranordnung: 1
- Trommel: 2
- Haube: 3
- Haubeninnenraum: 4
- Feststofffänger: 5
- Zulaufrohr: 6
- Verteiler: 7
- Verteilerkanäle: 8
- Trommelinnenraum: 9
- Trommelunterteil: 10
- Trommeloberteil: 11
- Trenntellerpaket: 12
- Trenntellern: 13
- Steigekanäle: 14
- Ableitungskanal: 15
- Verteilerschaft: 16
- Schälkammer: 17
- Schälscheibe: 18
- Scheideteller: 19
- Ableitungskanal: 20
- Schälkammer: 21
- Schälscheibe: 22
- Verteilerraum: 23
- Fluidverbindung: 24
- Einlass: 25
- Auslass: 26
- Umfangsspalt: 27
- Schälscheibenschaft: 28
- eine erste Bohrung: 30
- Schälscheibenkanal: 31
- Umfangsspalt: 32
- zweite Bohrung: 33
- Schälscheibenkanal: 34
- Feststoffaustragsöffnungen: 35
- Kolbenschieber: 36
- Ableitung: 37
- Ableitung: 38
- Spalt: 39
- Unterdruckanschluss: 40
- Pumpe: 41
- Antriebsraum: 42
- Antriebsmotor: 43
- Verbindung: 44
- Antriebsumhausung: 45
- Schmierungssystem: 46
- Spindellagerung: 47
- Ab- und Zuleitungen: 48
- Spindel: 49

## Patentansprüche

1. Separatoranordnung mit einem Separator mit einer drehbaren Trommel (2) mit vertikaler Drehachse, die ein Zulaufrohr (6) aufweist, welches in einen Verteilerraum (23) eines Verteilers (7) ragt, und mit einer die Trommel (2) umgebenden nicht drehbaren Haube (3), wobei zwischen der Haube (3) und der Trommel (2) ein gegen den Außenbereich der Haube (3) abgedichteter Haubeninnenraum (4) ausgebildet ist und wobei die Trommel (2) in einem Einlaufbereich nicht hermetisch gegen den Haubeninnenraum (4) abgedichtet ist, wobei der Separator selbst eine Einrichtung (24) zum Senken des Druckes im Haubeninnenraum (4) infolge von Drehungen der Trommel (2) nach Art einer Strahlpumpe aufweist, wobei die Einrichtung zum Senken des Druckes im Haubeninnenraum (4) infolge von Drehungen der Trommel (2) als wenigstens eine Fluidverbindung (24) zwischen dem Verteilerinnenraum und dem Haubeninnenraum (4) ausgebildet ist, derart, dass bei Drehungen der Trommel und bei einer Produktzuleitung durch das Zulaufrohr (6) und durch den Verteiler (7) in die Trommel (2) Luft/Gas aus dem Haubeninnenraum (4) durch die Fluidverbindung in den Verteilerraum (23) gesaugt wird, von wo sie durch die Trommel (2) und wenigstens eine Ableitung (37, 38) aus der Trommel (2) abgeleitet wird, **dadurch gekennzeichnet, dass** die Fluidverbindung als eine Fluidleitung (24) zwischen dem Haubeninnenraum (4) und dem Verteilerraum (23) ausgebildet ist, die am oder im Zulaufrohr (6) ausgebildet ist.

2. Separatoranordnung nach Anspruch 1, **dadurch gekennzeichnet, dass** die Fluidleitung (24) einen Einlass (25) aufweist, der am Zulaufrohr (6) oberhalb der Trommel (2) ausgebildet ist und dass sich die Fluidleitung (24) axial bis in die Höhe des Verteilerschafts (16) erstreckt, wo ein Auslass (26) in den Verteilerraum (23) ausgebildet ist.

3. Separatoranordnung nach einem der vorstehenden Ansprüche, **dadurch gekennzeichnet, dass** die Fluidverbindung (24) wenigstens eine eine Schälscheibe durchsetzende Bohrung (30, 33) aufweist.

4. Separatoranordnung nach einem der vorstehenden Ansprüche, **dadurch gekennzeichnet, dass** die Fluidverbindung (24) in das Zulaufrohr mündet.

5. Separatoranordnung nach Anspruch 4, **dadurch gekennzeichnet, dass** die Fluidverbindung (24) eine in Flussrichtung des Zulaufrohrs gerichtete Öffnung (26) aufweist.

6. Separatoranordnung nach einem der vorstehenden Ansprüche, **dadurch gekennzeichnet, dass** sie zusätzlich zur Einrichtung (24) bzw. zur Strahlpumpe eine weitere Pumpe zum Abpumpen von Gas/Luft aus dem Haubeninnenraum in den Raum außerhalb der Haube (3) aufweist.

7. Verfahren zum Senken des Druckes im Haubeninnenraum einer Separatoranordnung nach einem oder mehreren der vorstehenden Ansprüche, **dadurch gekennzeichnet, dass** mit der Einrichtung (24) der Druck im Haubeninnenraum (4) abgesenkt wird und dass vor einer Verarbeitung eines zu verarbeitenden Produktes zunächst eine Flüssigkeit durch die Trommel (2) geleitet wird, um mit der Einrichtung (24) nach Art einer Strahlpumpe den Druck im Haubeninnenraum (4) abzusenken, und dass danach die eigentliche Verarbeitung des zu verarbeitenden Produktes erfolgt.

8. Verfahren nach Anspruch 7, **dadurch gekennzeichnet, dass** die Flüssigkeit das Produkt selbst ist.

9. Verfahren nach Anspruch 7, **dadurch gekennzeichnet, dass** die Flüssigkeit Wasser ist.

## Claims

1. A separator arrangement with a separator with a rotatable drum (2), with a vertical rotational axis, which has a feed pipe (6) which projects into a distribution chamber (23) of a distributor (7), and with a non-rotatable hood (3) which encloses the drum (2), wherein a hood interior (4) which is sealed against the exterior region of the hood (3) is formed between the hood (3) and the drum (2) and wherein the drum (2) in an inlet region is not hermetically sealed against the hood interior (4), wherein the separator itself has a device (24) for lowering the pressure inside the hood interior (4) as a result of rotations of the drum (2) in the manner of a jet pump wherein the device for lowering the pressure inside the hood interior (4) as a result of rotations of the drum (2) is designed as at least one fluid connection (24) between the distribution chamber and the hood interior (4) in such a way that during rotations of the drum and during a product feed through the feed pipe (6) and through the distributor (7) into the drum (2) air/gas is drawn out of the hood interior (4) through the fluid connection into the distribution chamber (23), from where it is discharged through the drum (2) and out of the drum (2) through at least one discharge pipe (37, 38) **characterized in that** the fluid connection is designed as a fluid pipe (24) between the hood interior (4) and the distribution chamber (23) and is formed on or in the feed pipe (6).

2. The separator arrangement as claimed in claim 1, **characterized in that** the fluid pipe (24) has an inlet (25) which is formed on the feed pipe (6) above the drum (2) and **in that** the fluid pipe (24) extends axially up to the level of the distributor shaft (16) where an outlet (26) into the distribution chamber (23) is formed.

3. The separator arrangement as claimed in one of the preceding claims, **characterized in that** the fluid connection (24) has at least one bore (30, 33) which passes through a paring disk.

4. The separator arrangement as claimed in one of the preceding claims, **characterized in that** the fluid connection (24) opens into the feed pipe.

5. The separator arrangement as claimed in claim 4, **characterized in that** the fluid connection (24) has an opening (26) which is oriented in the flow direction of the feed pipe.

6. The separator arrangement as claimed in one of the preceding claims, **characterized in that** in addition to the device (24) or in addition to the jet pump it has a further pump for pumping gas/air out of the hood interior into the space outside the hood (3).

7. A method for lowering the pressure inside the hood interior of a separator arrangement as claimed in one or more of the preceding claims, **characterized in that** the pressure inside the hood interior (4) is lowered by means of the device (24) and that before processing a product which is to be processed a liquid is first of all directed through the drum (2) in order to lower the pressure inside the hood interior (4) by means of the device (24) in the manner of a jet pump, and **in that** after this the actual processing of the product which is to be processed is carried out.

8. The method as claimed in claim 7, **characterized in that** the liquid is the product itself.

9. The method as claimed in claim 7, **characterized in that** the liquid is water.

## Revendications

1. Disposition de séparateur avec un séparateur muni d'un tambour rotatif (2) à axe de rotation vertical, qui présente un tuyau d'arrivée (6) dépassant dans un espace de distribution (23) d'un distributeur (7), et avec un capot (3) non rotatif entourant le tambour (2), dans laquelle est formé entre le capot (3) et le tambour (2) un espace intérieur de capot (4) isolé de l'extérieur du capot (3) et dans laquelle le tambour (2) n'est pas isolé de façon hermétique de l'espace intérieur du capot (4) dans une zone d'entrée, dans laquelle le séparateur lui-même présente une installation (24) pour abaisser la pression dans l'espace intérieur du capot (4) à la suite de rotations du tambour (2) à la manière d'une pompe à jet, l'installation pour abaisser la pression dans l'espace intérieur du capot (4) à la suite de rotations du tambour (2) étant conformée comme au moins une communication de fluide (24) entre l'espace intérieur du distributeur et l'espace intérieur du capot (4), de telle sorte que lors de rotations du tambour et avec une conduite d'arrivée de produit passant par le tuyau d'arrivée (6) et à travers le distributeur (7) jusque dans le tambour (2), de l'air/du gaz est aspiré hors de l'espace intérieur du capot (4) à travers le communication de fluide vers l'espace de distribution (23), à partir duquel il est évacué hors du tambour (2) à travers le tambour (2) et au moins une conduite d'évacuation (37, 38), **caractérisée en ce que** la communication de fluide est conformée comme une conduite de fluide (24) entre l'espace intérieur du capot (4) et l'espace de distribution (23), qui est formée sur ou dans le tuyau d'arrivée (6).

2. Disposition de séparateur selon la revendication 1, **caractérisée en ce que** la conduite de fluide (24) présente une entrée (25) qui est formée sur le tuyau d'arrivée (6) au-dessus du tambour (2) et **en ce que** la conduite de fluide (24) s'étend dans le sens axial jusqu'à la hauteur de l'arbre du distributeur (16), où une sortie (26) est formée dans l'espace de distribution (23).

3. Disposition de séparateur selon l'une des revendications précédentes, **caractérisée en ce que** la communication de fluide (24) présente au moins un alésage (30, 33) qui traverse un disque racleur.

4. Disposition de séparateur selon l'une des revendications précédentes, **caractérisée en ce que** la communication de fluide (24) débouche dans le tuyau d'arrivée.

5. Disposition de séparateur selon la revendication 4, **caractérisée en ce que** la communication de fluide (24) présente une ouverture (26) orientée dans le sens d'écoulement du tuyau d'arrivée.

6. Disposition de séparateur selon l'une des revendications précédentes, **caractérisée en ce qu'**il comporte, outre l'installation (24) ou la pompe à jet, une autre pompe pour pomper du gaz/de l'air hors de l'espace intérieur du capot vers l'espace situé à l'extérieur du capot (3).

7. Procédé pour abaisser la pression dans l'espace intérieur du capot d'une disposition de séparateur selon une ou plusieurs des revendications précédentes, **caractérisé en ce que** la pression dans l'espace intérieur du capot (4) est réduite avec l'installation (24) et **en ce qu'**un liquide est acheminé à travers le tambour (2) avant un traitement d'un produit à traiter afin de réduire la pression dans l'espace intérieur du capot (4) avec l'installation (24) à la manière d'une pompe à jet, et **en ce que** le traitement proprement dit du produit à traiter a lieu ensuite.

8. Procédé selon la revendication 7, **caractérisé en ce que** le liquide est le produit lui-même.

9. Procédé selon la revendication 7, **caractérisé en ce que** le liquide est de l'eau.
